(19) Europäisches Patentamt / European Patent Office / Office européen des brevets

(11) **EP 2 226 760 A1**

(12) **EUROPEAN PATENT APPLICATION**

(43) Date of publication:
08.09.2010 Bulletin 2010/36

(51) Int Cl.:
*G06T 5/00* (2006.01)    *G06T 9/00* (2006.01)
*G06T 5/20* (2006.01)

(21) Application number: 09154206.8

(22) Date of filing: 03.03.2009

(84) Designated Contracting States:
AT BE BG CH CY CZ DE DK EE ES FI FR GB GR HR HU IE IS IT LI LT LU LV MC MK MT NL NO PL PT RO SE SI SK TR
Designated Extension States:
AL BA RS

• Springer, Paul
70327 Stuttgart (DE)
• Dolar, Carsten
44227 Dortmund (Technologiepark) (DE)
• Richter, Martin
44227 Dortmund (Technologiepark) (DE)

(71) Applicant: **Sony Corporation**
**Tokyo 108-0075 (JP)**

(72) Inventors:
• **Erdler, Oliver**
**70327 Stuttgart (DE)**

(74) Representative: **Witte, Weller & Partner**
**Postfach 10 54 62**
**70047 Stuttgart (DE)**

Remarks:
Amended claims in accordance with Rule 137(2) EPC.

(54) **Method and apparatus for reducing compression artifacts in video signals**

(57) The present invention relates to a method for reducing compression artifacts in a video signal, comprising the steps of filtering discontinuous boundaries within the input image (2), and smoothing the filtered image.

The present invention further relates to an apparatus for reducing compression artifacts in a video signal.

Fig. 1

EP 2 226 760 A1

**Description**

The present invention relates to an apparatus and a method for reducing compression artifacts in a video signal. Specifically, the present invention aims at the reduction of errors in image sequences transmitted with a lossy block based coding scheme.

The distribution of video content is nowadays not only possible via the traditional broadcast channels (terrestric antenna / satellite / cable), but also via internet or data based services. In both distribution systems the content may suffer a loss of quality due to limited bandwidth and/or storage capacity. Especially in some internet based video services as video portals (e.g. YouTube ™) the allowed data rate and storage capacity is very limited. Thus the resolution and frame rate of the distributed video content may be quite low. Furthermore, lossy source coding schemes may be applied to the video content (e.g. MPEG2, H.263, MPEG4 Video, etc.) which also negatively affects the video quality and some essential information may be lost (e.g. textures or details).

A lot of source coding schemes are based on the idea to divide an image into several blocks and transform each block separately to separate relevant from redundant information. Only relevant information is transmitted or stored. A widely used transformation is the discrete cosine transform (DCT). As two consecutive frames in a video scene do in most cases not differ too much, the redundancy in the temporal direction may be reduced by transmitting or storing only differences between frames. The impact of such lossy coding schemes may be visible in the decoded video if some relevant information is not transmitted or stored. These visible errors are called (coding) artifacts.

There are some typical coding artifacts in block based DCT coding schemes. The most obvious artifact is blocking: The periodic block raster of the block based transform becomes visible as a pattern, sometimes with high steps in amplitude at the block boundaries. A second artifact is caused by lost detail information and is visible as periodic variations across object edges in the video content (ringing). A varying ringing in consecutive frames of an image sequence at object edges may be visible as a sort of flicker or noise (mosquito noise).

Coding artifacts are not comparable to conventional errors such as additive Gaussian noise. Therefore conventional techniques in error reduction and image enhancement may not be directly transferred to coding artifact reduction. While blocking is nowadays reduced by adaptive low-pass filters at block boundaries (either in-the-loop while decoding or as post-processing on the decoded image or video), ringing is more difficult to reduce, since the applied filtering must not lower the steepness of edges in the image content.

The reduction of quantization errors in block based coding schemes such as MPEG2 in video sequences can be done by a wide variety of algorithms. Basic classes are: Spatial lowpass-filtering (static or adaptive), multiband-processing (e.g. in the wavelet-domain) and iterative reconstruction techniques (e.g. projection onto convex sets).

The first class comprises algorithms that filter across block boundaries to smooth the discontinuity between two adjacent blocks. The strength and the length of the filter kernel for smoothing can be adjusted to image information (Piastowski, P.: "System zur Decoder-unabhängigen Reduktion von Blockartefakten". 11. Dortmunder Fernsehseminar. VDE Verlag, (2005)).

The second class contains methods that apply a multiband decomposition in order to separate error and image information (e.g. by a warped wavelet transform Le Pennec, E. & Mallat, S. : "Sparse Geometrical Image Representations With Bandelets". IEEE Transactions on Image Processing, Vol. 14, No. 4, April 2005) and to reduce the error in the subbands. After combining the subbands, the resulting image sequence should contain less error.

Algorithms of the third class try to establish a reconstructed image by formulating mathematical image properties the resulting image has to adhere, e.g. that the coded version of the resulting image needs to be the same as the coded input image (Zhong,S.: "Image Crompression by Optimal Reconstruction". US Patent 5,534,925. Jul 1996). The algorithms usually try to solve an inverse problem with an iterative scheme (Alter, F.; Durand, S. & Froment, J. : "Adapted total variation for artifact free decomposition of JPEG images". Journal of Mathematical Imaging and Vision, Vol. 23, No. 2. Springer Netherlands, 2005, Yang, S. & Hu, Y. : "Blocking Effect Removal Using Regularization and Dithering" IEEE International Conference on Image Processing, 1998. ICIP 98. Proceedings. 1998).

In some cases there has to be some further constraints on the image shape, for instance an image with minimal total variation is preferred over other solutions.

In most cases a spatial processing is preferred over the other algorithm classes due to its algorithmic simplicity which yields a good controllability and the possibility for a fast implementation. Furthermore, a solely spatial processing performs better than temporal based processing in scenes with fast movements, because the algorithm does not rely on motion vectors that might be erroneous.

The main disadvantages of spatial filtering algorithms for blocking reductions, however, are remaining blocking in homogeneous areas and remaining ringing artifacts at edges in the image. In an image sequence, the remaining errors can lead to a noise impression. Especially in content with low bitrate and low resolution (e.g. web TV or IPTV) the remaining artifacts are very annoying after a scaling process.

Therefore a specialized treatment for the remaining artifacts needs to be applied. In Devaney et al. : "Post-Filter for Removing Ringing Artifacts of DCT Coding". US Patent 5,819,035. Oct 1998 an anisotropic diffusion filtering is proposed to reduce ringing artifacts. However, the processing proposed therein is designed for high quality material and lacks a prior de-blocking which is essential in this context since severe blocking artifacts (yielding high gradient values) are not processed at all.

It is therefore the object of the present invention to improve the prior art. It is further the object of the present invention to reduce the problems posed by the prior art.

Specifically, the present invention has the object to present an apparatus and a method for reducing compression artifacts in a video signal, enabling the improvement of the video quality in an effective and easy way.

The above object is achieved by a method for reducing compression artifacts in a video signal according to claim 1.

The object is further achieved by an apparatus for reducing compression artifacts in a video signal according to claim 15.

Advantageous features and embodiments are defined in the dependent claims.

Further features, advantages and objects of the present invention will become evident by means of the figures of the enclosed drawings as well as by the following detailed explanation of illustrative-only embodiments of the present invention.

Figure 1 shows a schematic block diagram of an apparatus according to the present invention,

Figure 2 shows a schematic block diagram of a regularizer according to the present invention,

Figure 3 shows a flow chart with the process steps according to a first embodiment of the present invention,

Figure 4 shows a flow chart with the process steps according to a second embodiment of the present invention

Figure 5 shows a schematic block diagram of a weighting factor generator according to a first embodiment of the present invention,

Figure 6 shows a schematic block diagram of a weighting factor generator according to a second embodiment of the present invention, and

Figure 7 to 9 show different embodiments of a filter mask according to the present invention.

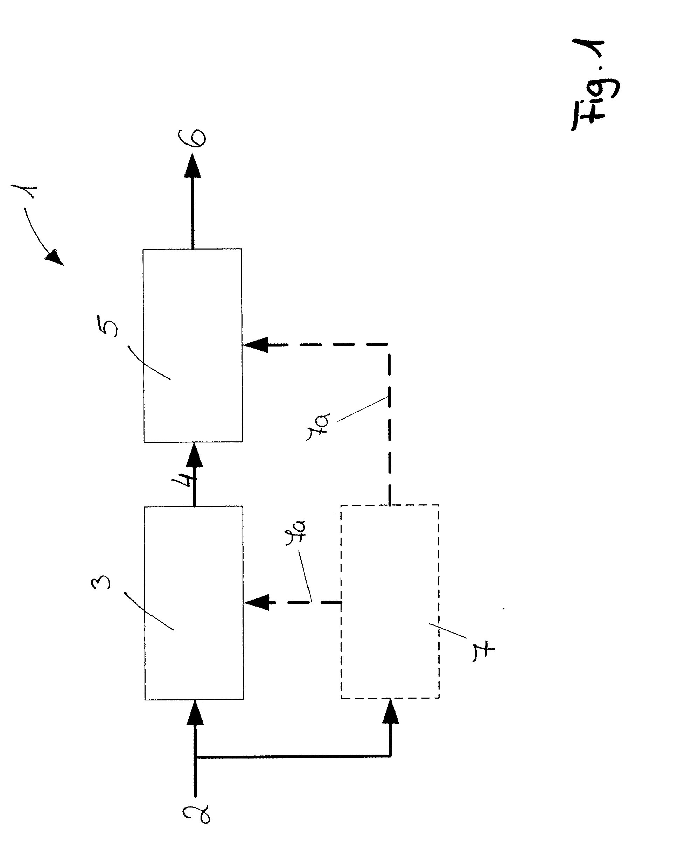

Figure 1 shows a schematic block diagram of an apparatus for reducing compression artifacts in a video signal according to the present invention. The video signal hereby can comprise a single image or a sequence of images. The apparatus 1 comprises a block noise filter 3 for filtering discontinuous boundaries within the input image 2 and a regularizer 5 for smoothing the filtered image.

The input image 2 is submitted to the block noise filter 3. The block noise filter 3 can be any type of for example low-pass filter which is adapted to reduce the blocking artifacts. Preferably, a local adaptive low-pass filtering only across block boundaries is carried out. The reason for this pre-processing is the smoothing of discontinuities at block boundaries and to protect edges and details as far as possible. Any common deblocking scheme can be used as block noise reduction algorithm, adaptive schemes with a short filter for detailed areas, a long filter for flat areas and a fallback mode are preferred.

The filtered image 4 is then submitted to the regularizer 5, which smoothes the filtered image 4. The processed image 6 is then output by the regularizer 5.

Optionally, according to a preferred embodiment an image analyzer 7 can also be provided. The input image 2 is also submitted to the image analyzer 7, which based on the input image 2 carries out image analysis. Specifically, the image analyzer 7 carries out the analysis step in order to detect certain image areas. For example the image analyzer 7 is adapted to detect edges, blocking level detection, textures or the like. The analysis information 7a can be submitted to the block noise filter 3 and/or the regularizer 5.

An advantage of using the analysis information 7a in the block noise filter 3 is that it is thereby possible to be independent from coding parameters, since the block noise filter 3 can use results from the local and/or global image analysis. In a preferred embodiment, the regularizer 5 uses the results of two different edge detection methods with different sensitivity to detect textured regions and prevent processing of these regions.

By combining the step of filtering by the block noise filter 3 with the step of smoothing the filtered image by the regularizer 5, an image with a higher quality than prior art methods is achieved. The deblocked and regularized processed image 6 is much more appealing than a deblocked image alone, since remaining blocking after the deblocking stage and ringing artifacts are reduced without blurring edges in the video content. Therefore, the proposed coding artifact reduction method is appropriate to enhance video material with low resolution and low data rate, since the processing maybe carried out aggressively to reduce many artifacts without suffering blurring in essential edges in the image.

In a preferred embodiment, as will be explained in detail later, the gradient values of the filtered image 4 and/or of a previously smoothed image are determined. The smoothing is then carried out depending on the gradient values, i.e. the level of smoothing is selected based on the gradient values. More specifically, a high level of smoothing is used for low gradient values and a low level of smoothing is selected for high gradient values. Thereby, artifacts are reduced while edges are maintained.

In other words, the regularizer 5 applies a harmonizing to the image, based on minimization of the total variation. According to the underlying mathematical model, this filter protects high gradient values in the image, small gradient values are smoothed, thus a mathematically optimal image with edges and flat areas is obtained. The image thus has an improved quality.

However, in order to further improve the image quality, the present invention in a preferred embodiment proposes to additionally analyse the image with respect to image areas, i.e. edges, textures or the like and to use this information for the regularization. Since with the basic method of regularizing an image without or blurred textures is obtained, this method even though representing the mathematical optimum does not lead to a good visual impression for natural images. The protection of certain image areas (regions with textures and high details) by an external image analyzer 7 is therefore provided in a preferred embodiment.

It has further been found in the present invention, that reduction of coding artifacts by simply applying the minimization of the total variation is not possible. Reason for this is that discontinuities at block boundaries can lead to high gradient values. Because the regularization obtains high gradient values by minimizing the total variation, blocking artifacts remain unprocessed. Therefore the degree of the degradation is not changed and the resulting output does contain the same or only slightly reduced blocking as in the input material leading to a bad image quality. Therefore it is not possible to use the same regularization method for Gaussian noise reduction (as proposed by e.g. Rudin/Osher/Fatemi) and for coding artifact reduction without strong modifications to the existing method.

Therefore, the present invention proposes an additional (adaptive) pre-processing step and a local adoption, which are accomplished by the block noise filter 3.

The regularization process introduces a smoothing along the main spatial direction, i. e. along edges to reduce the variations along this direction. Within the present invention the term "Regularization" is intended to refer to a harmonization of the image impression by approximation with an image model. The term "total variation" denotes the total sum of the absolute values of the gradients in an image which defines the total variation of the image. It is assumed that of all possible variants of an image the one with the lowest total variation is optimal. In the optimal case this leads to an image model, where the only variations stem from edges.

As the regularization is the key component in this invention, it will be described in more detail.

The basic idea of the regularization process is to reduce variations in an image (sequence) while preserving edges. In order to keep the resulting image similar to the input image, the mean square error must not be too big. The mathematical formulation of this problem is done by seeking an image (sequence) $u$ that minimizes the energy functional:

$$E(u) = \int_{\Omega} \left( u_0(x) - u(x) \right)^2 dx + \lambda \int_{\Omega} \phi\left( \left| \mathrm{grad}\, u(x) \right| \right) dx \qquad (1)$$

In this formula $u_0$ denotes the input signal, $u$ denotes the output signal, $x$ is the (vector valued) position in the area $\Omega$ in which the image is defined. The function $\phi(s)$ weights the absolute value of the gradient vector of the signal $u$ at position $x$. In literature there are different variants of how to choose this function, one being the total variation with $\phi(s) = s$, another being $\phi(s) = \sqrt{s^2 + \varepsilon^2}$.

By applying the calculus of variation to (1) the following partial differential equation can be derived (omitting the position variable $x$):

$$\left( u - u_0 \right) - \lambda \, \mathrm{div}\left( \frac{\phi'\left( \left| \mathrm{grad}\, u \right| \right)}{2 \cdot \left| \mathrm{grad}\, u \right|} \, \mathrm{grad}\, u \right) = 0 \qquad (2)$$

The term $\phi'(s)/2s$ gives a scalar value that depends on the absolute value of the gradient and that locally weights the gradient of *u* in the divergence term. As can be found in literature, the weighting function should tend to 1 for (grad $u \rightarrow 0$) and tend to 0 for (grad $u \rightarrow \infty$).

Known solving algorithms for (2) are for instance the gradient descent method or the "lagged diffusivity fixed point iteration" method. Both methods treat the term ${\phi'(s)}/{2s}$ as constant for one iteration step. For instance, the gradient descent method solving (2) is formulated as follows:

$$u^{n+1} = u^n + \Delta\tau\left(\left(u^n - u_0\right) + \lambda \operatorname{div}\left(b^n \cdot \operatorname{grad} u^n\right)\right) \tag{3}$$

This iterative scheme calculates directly the solution *n* + 1 by using the results of step *n*. The initial solution is the input image ($u^0 = u_0$). The step-width $\Delta\tau$ influences the velocity of convergence towards the optimum but must not be chosen too big, since the solution might diverge. The weighting parameter $b^n = \dfrac{\phi'\left(\left|\operatorname{grad} u^n\right|\right)}{2\left|\operatorname{grad} u^n\right|}$ is calculated using the solution from step n as well. The results for this weighting function might be stored in a look-up table which gives two advantages. First, the weighting function can be directly edited, hence this circumvents the process of finding an appropriate function $\phi(s)$. Second, the look-up table can be used to speed up the calculation of the results of $b^n$ by avoiding time demanding operations such as square, square root and division. The calculation of the divergence and the gradient can make use of known finite difference approximations on the discrete version of *u*, i.e. the digital image. Examples of a finite difference schemes in the two-dimensional case are:

$$\operatorname{grad} u = \begin{pmatrix} \delta_{x1}(u) \\ \delta_{x2}(u) \end{pmatrix},$$

with

$$\delta_{x1}(u) \approx 0.5 \cdot \left(u_{(i+1,j)} - u_{(i-1,j)}\right), \; \delta_{x2}(u) = 0.5 \cdot \left(u_{(i,j+1)} - u_{(i,j-1)}\right) \tag{4}$$

$$\operatorname{div}\begin{pmatrix} v_1 \\ v_2 \end{pmatrix} \approx \delta_{x1}(v_1) + \delta_{x2}(v_2)$$

The regularization leads to a spatial low pass filter that adapts its filter direction based on the information generated with the function $\dfrac{\phi'(s)}{2s}$ which assesses the absolute value of the local image gradient. The main filter direction is therefore adjusted along edges, not across, yielding a suppression of variations along edges and a conservation of its steepness.

There are several ways of adopting the regularizing process to local image analysis information other than the local image gradient: A first possibility is local manipulation of the value given by $b^n$ based on local image analysis information by scaling of the gradient vector by directly weighting $\delta_{x1}(u)$ and $\delta_{x2}(u)$, adding a scalar or vector valued bias signal to the scaled gradient vector and/or scaling the value of $b^n$ itself. A second possibility is locally adopting the weighting factor $\lambda$ that controls the amount of regularization to the local image analysis information.

The adaptation with the first possibility has an influence on the direction of the divergence; the second possibility will adjust the amount of smoothing. The local adaptation can be introduced to equation (3) by multiplying the components of the gradient vector with an image content adaptive scaling factor ($\mu_{x1}$ and $\mu_{x2}$), adding an image content adaptive offset ($v_{x1}$ and $v_{x2}$), as well as multiplying the resulting weighting factor with an image content adaptive scaling factor $\gamma$.

Those modifiers are derived from the external image analysis information.

$$u^{n+1}(x) = u^n(x) + \Delta\tau\left(\left(u^n(x) - u_0\right) + \lambda(x)div\left(b^n(x) \cdot \begin{bmatrix} \delta_{x1}(u^n(x)) \\ \delta_{x2}(u^n(x)) \end{bmatrix}\right)\right)$$

$$with\ b^n(x) = \gamma(x) \cdot \frac{\phi'(s)}{2s}\ and\ s = \left\| \begin{pmatrix} \mu_{x1}(x) \cdot \delta_{x1}(u^n(x)) + v_{x1}(x) \\ \mu_{x2}(x) \cdot \delta_{x2}(u^n(x)) + v_{x2}(x) \end{pmatrix} \right\|$$

$$(5)$$

The image analysis information may contain information about the location of block boundaries, the overall block noise level in a region, the noise level in a region, the position and strength of edges in the image, region of details to be saved and/or other information about local or global image attributes.

The main drawback of the described gradient descent solving schema for the partial differential equation is that it converges relatively slowly and also might diverge when the wrong $\Delta\tau$ is chosen. To overcome these problems, the explicit formulation (3) is changed to an implicit formulation:

$$\left(u^{n+1} - u^0\right) + \lambda \operatorname{div}\left(b^n \cdot \operatorname{grad} u^{n+1}\right) = 0 \qquad (6)$$

The divergence at a given pixel position ($i,j$) is

$$\operatorname{div}_{i,j}\left(b^n \operatorname{grad} u^{n+1}\right)$$
$$= 0.25\left(u^{n+1}_{i-2,j} \cdot b^n_{i-1,j} + u^{n+1}_{i+2,j} \cdot b^n_{i+1,j} + u^{n+1}_{i,j-2} \cdot b^n_{i,j-1} + u^{n+1}_{i,j+2} \cdot b^n_{i,j+1}\right) - 0.25 u^{n+1}_{i,j}\left(b^n_{i-1,j} + b^n_{i+1,j} + b^n_{i,j-1} + b^n_{i,j+1}\right)$$

using a central differences scheme.

This implicit formulation requires a solving algorithm which can for example be the iterative Gauss-Seidel algorithm.

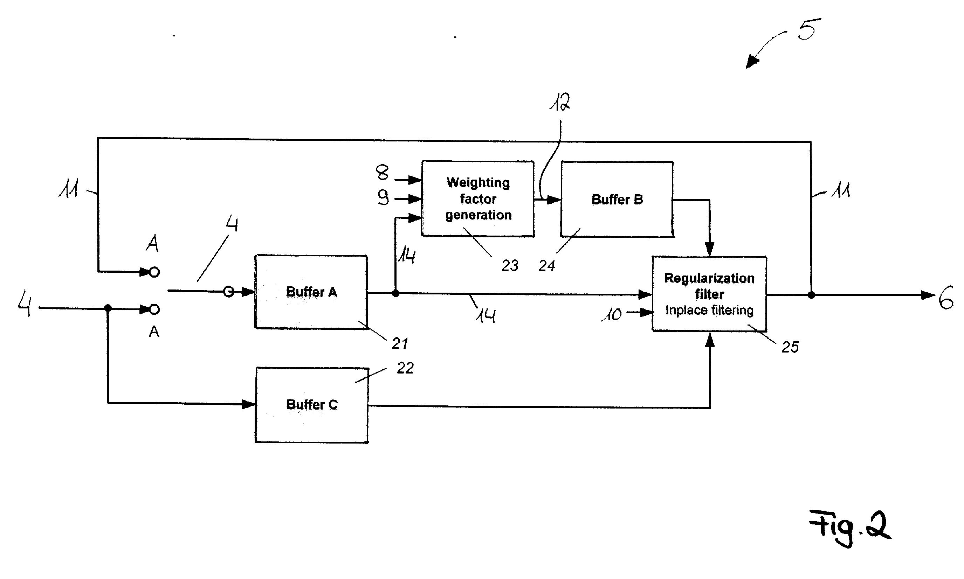

Figure 2 shows a more detailed schematic block diagram of the regularizer 5 according to the present invention. First of all the input image 4 is fed to a first buffer 21, which is in the following called buffer A. The input image 4 is also fed to a second buffer 22, which in the following is called buffer C.

In the next step weighting factors 12 are generated by a weighting factor generator 23 based on the values stored in buffer A and the results, i.e. the weighting factors 12 are fed to a third buffer 24, which in the following is called buffer B. During computation of the weighting factors 12 it can be determined if a generation of new weighting factors 12 should be done or if the values (from previous iterations) in buffer B should remain there. The corresponding commands 9 indicating whether new weighting factors 12 should be calculated or whether the previous values should be kept, can be additionally submitted to the weighting factor generator 23. Additionally, it is possible to use external data 8 which is based on the results from the image analysis information 7a for weighting factor generation.

After this generation step for each pixel of the image stored in buffer A a weighting factor 12 exists, which is required for the regularizing filter 25. The regularizing filter 25 processes the data from buffer A and the processed output will directly be stored in buffer A. Thereby a filter structure with infinite impulse response is generated (described in literature as IIR-Filter or inplace filter). After processing of the image by the regularizing filter 25 the filtering can be applied again. In this case it is possible to prevent the generation of new weighting coefficients 12 to use the same weighting factors 12 from buffer B for this further iteration. This processing is advantageous in some cases. The amount of regularization, i. e. the level of smoothing, is controlled by the regularization rate 10.

For every pixel of an image stored in buffer A the regularization filter 25 applies the regularizing step and overwrites the same pixel value of the image presently stored in buffer A. The image submitted from the regularization filter 25 to buffer A will therefore be referred to a previously smoothed image 11. In case that the number of iterations is sufficient, then instead of storing the previously smoothed image 11 in buffer A this image is output as final processed image 6.

That means that weighting factors 12 are generated at least once and that with one set of weighting factors 12 one or more iterations within the regularization filter 25 can be accomplished. Via the commands 9 a generation of new weighting factors 12 for one or more iterations of the regularization filter 25 can be prevented.

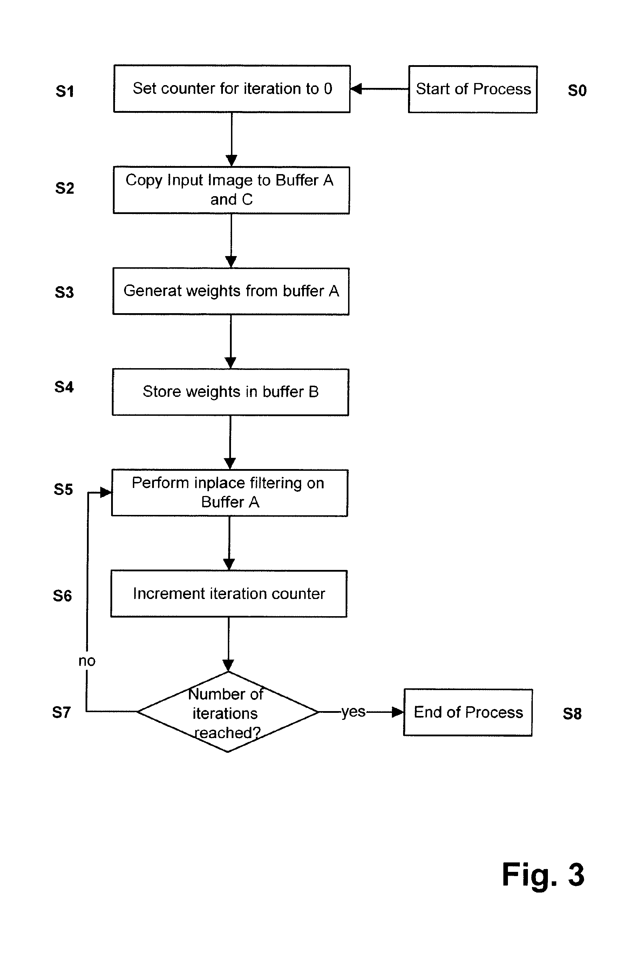

Figure 3 shows a flow chart of the steps carried out for regularizing according to a first embodiment of the present invention. In case that the weighting factors 12 are only computed once, then the embodiment as shown in figure 3 is used.

The process starts in step S0 In step S1 the counter for the iteration, i.e. the iterations of the regularization filter 25, is set to zero. In the following step S2 the filtered input image 4 is stored in buffer A and buffer C. In the next step S3 the weighting factors 12 are generated based on the information stored in buffer A and optionally on external data. In the following step S4 the generated weighting factors 12 are stored in buffer B.

In step S5 the regularization filter 25 carries out in place filtering and the filtered, i.e. the smoothed image is then again stored in buffer A. In the next step S6 the iteration counter is incremented by one.

In the following step S7 it is checked whether the number of necessary iterations is reached; this can be a number of one or more, preferably an adjustable number of iterations which meets the computational constraints of given signal characteristics. If the number of iterations is reached then the process ends in step S8. Otherwise the process continues with step S5 and again the inplace filtering is accomplished.

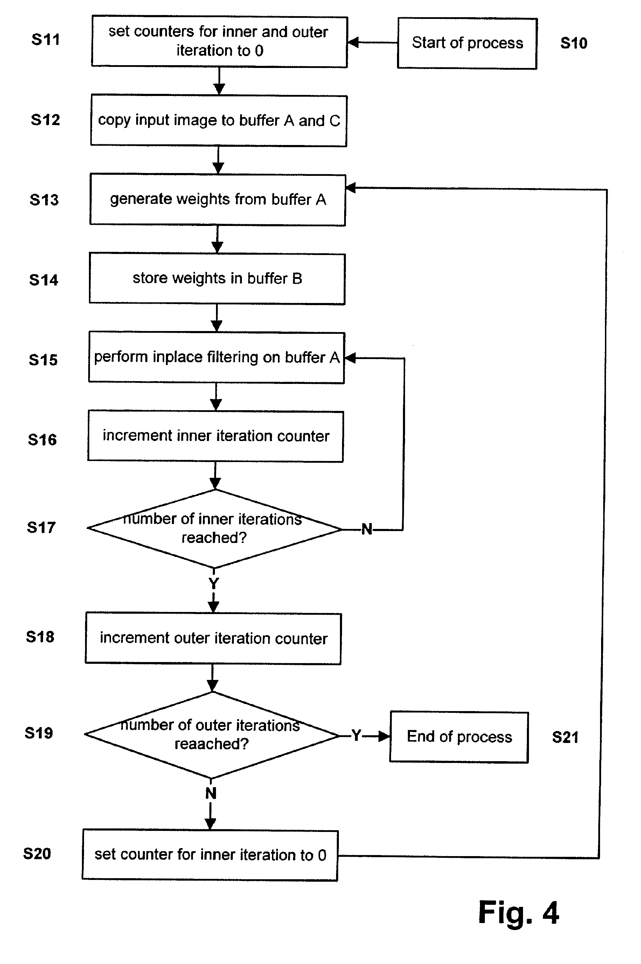

Figure 4 shows a second embodiment of regularizing the image, whereby this embodiment covers the possibility that the weighting factors 12 are generated more than once.

The process starts in step S10. In step S11 counters for inner and outer iteration are set to zero. In the following step S 12 the filtered input image 4 is copied to buffer A and buffer C.

In the next step S 13 the weighting factors 12 are generated based on the information stored in buffer A and optionally based on external image analysis information. In the following step S 14 the generated weighting factors 12 are stored in buffer B and in the following step S 15 the inplace filtering by the regularization filter 25 is performed and the processed filtered values are stored in buffer A.

In the following step S 16 the inner counter is incremented indicating the number of inplace filter iterations. In the next step S 17 it is checked whether the number of inner iterations is reached. Preferably, the number of inner iterations being sufficient is an adjustable number of iterations which meets the computational constraints or given signal characteristics. Otherwise it can also be checked whether the maximum difference between the previously smoothed image 11 and the actual processed image is less than a certain value. If the number of inner iteration is not reached, then the process goes back to step S 15. Otherwise, the process continues with step S 18.

In step S 18 the outer iteration counter indicating the number of times weighting factors 12 are created is incremented by one. In the following step S 19 it is checked whether the number of outer iterations is reached. Preferably, the number of outer iterations is set to an adjustable number of iterations which meets the computational constraints or given signal characteristics but also any other number of outer iterations being more than one is possible.

If in step S 19 it is decided that the number of outer iterations is reached, then the process ends in step S21. Otherwise the process continues with step S20 in which the counter for the inner iteration is reset to 0 and then returns to step S13 where new weighting factors 12 are generated based on the information stored in buffer A.

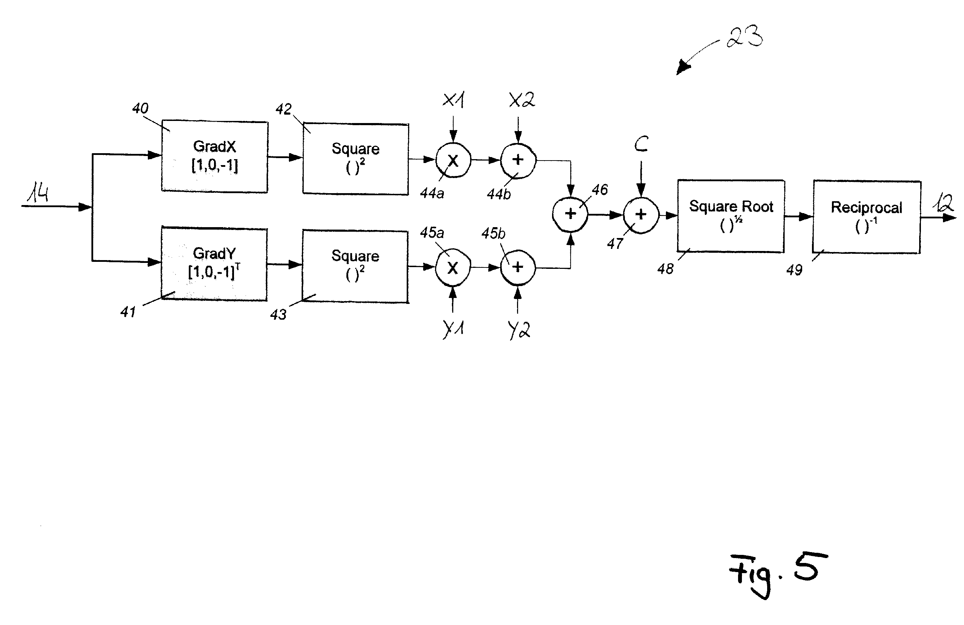

Figure 5 shows a schematic block diagram of the weighting factor generator 23 according to a preferred embodiment of the present invention.

The generation of weighting coefficients which should be stored in buffer B is extremely important. Weighting coefficients have to be greater than or equal to zero. For regions to be considered to remain unprocessed the weighting coefficient must tend to zero. Thereby it is possible to prevent filtering by the regularizing filter for the related pixels and no smoothing is applied. To protect edges the absolute value of the gradient is used for weighting factor generation. The computation can be derived from the block diagram in figure 5.

It has to be noted that this is just one possible implementation. Other variants are possible to protect other regions than edges or to minimize distortions. E.g. it is possible to use the local variance for protection of textured regions or information about the blocking level can be used for this case; further it is possible to use the blocking level to remove the protection of high gradients at block borders. In the implemented variant the computation of weighting factors by gradient operations is done separately for horizontal 40 and vertical 41 direction. For gradient calculation a 3-tap filter is used with the coefficients 1, 0 and -1. It is possible to use different gradient filters but for low resolution material with low bitrate this symmetric variant is preferred.

The output is squared for each pixel as well for the horizontal and the vertical processing branch 42, 43. To protect image details marked for protection through an image analysis the calculated gradients can be modified in its size separately in horizontal and vertical direction by a multiply-add stage 44ab, 45ab. This is new compared to conventional methods to calculate weighting factors used for Gaussian noise reduction. The external data X1, X2, Y1, Y2 must vary the gradient in a manner that in image areas which should be protected the results from 44b respectively 45b have a high value. In formula (5) X1, X2 and Y1, Y2 are denoted with $\mu_{X1}$, $\nu_{X1}$, $\mu_{X2}$, $\nu_{X2}$, respectively. The results of horizontal and vertical branches are summed up 46 and a constant value C is added by adding stage 47. This constant C is set to 1 in the proposed implementation. Finally the square root 48 and the inverse 49 are calculated.

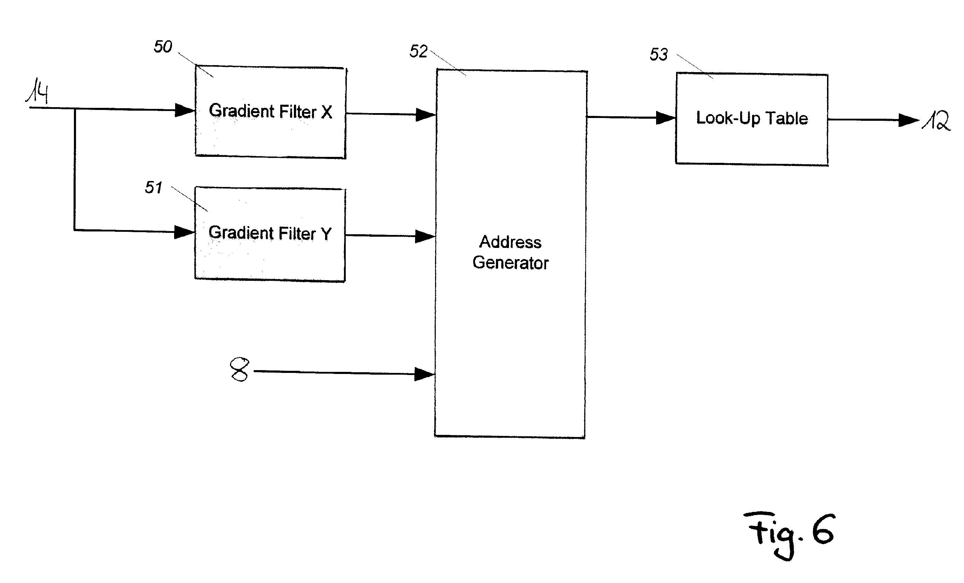

Figure 6 shows an alternative embodiment, where the weighting factors 12 are stored in a look-up table. Alternatively to the weighting factor generation described above pre-defined values from a look-up table can be used to prevent the computational complexity of the square, square root and/or the inverse. An example for this is depicted in figure 6. In this case after computing the gradients by horizontal 50 and vertical 51 gradient filters an address-operator 52 is used. This address-operator 52 uses the horizontal and vertical gradient outputs and external data from image analysis to generate an address for a look-up table. The weighting coefficients 12 are then read out from the look-up table 53 at the generated address position. The weighting coefficient 12 for each pixel generated like this is then stored in buffer B.

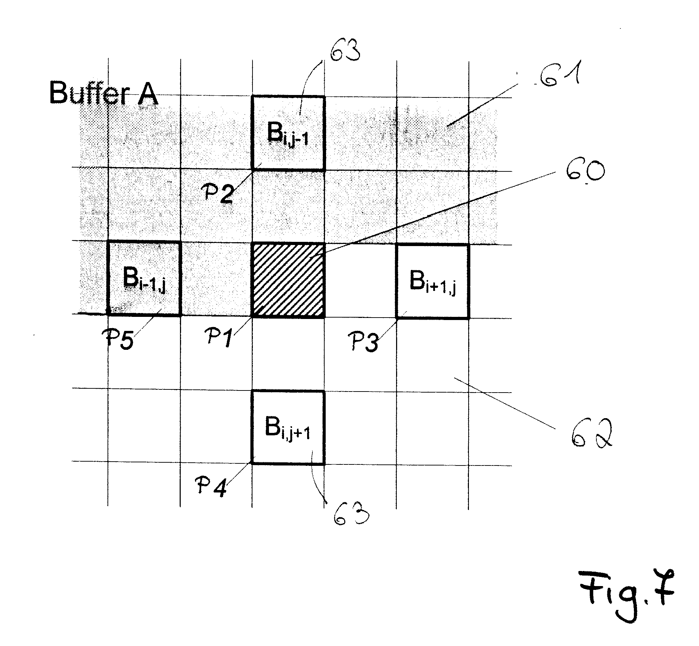

In the following, the algorithm of the regularization filter 25 will be explained in more detail with reference to figures 7 to 9. Generally, an actual position 60, i.e. a pixel, within the actual image to be smoothed is selected. Then within the image stored in buffer A, which is the original filtered image 4 submitted from the block noise filter 3 and/or the previously smoothed image 11 transmitted from the regularization filter 25 during the last iteration step, at least one further pixel 63 is selected and weighting factors 12 are obtained from buffer B. The smoothing of the actual position 60 is then based on the values of the at least one further position 63 and on the least one weighting factor 12.

It has to be noted, that the filter masks shown in figures 7 to 9 indicating the selection of further pixels 63 and the election of weighting factors 12 are only examples and the present invention is not limited to the shown examples but encompasses any filter mask, where at least one further pixel and at least one weighting factor are used independent of the position of the at least one further pixel. It is further to be noted that the position of the at least one further 63 and the position of the pixel, for which the weighting factor 12 was calculated do not necessarily have to be the same.

This concept will therefore first be explained in a general way and the non-limiting examples of the figures 7 to 9 will be explained.

The image regularization is in the particular implementation of the invention based on the minimization of the total variation. The mathematical expression of total variation can be reduced to a recursive, adaptive filtering.

In this case recursive means results calculated previously are used to calculate new results. The image is filtered from upper left pixel (first line, first row) to the bottom right pixel (last line, last row) by a line-wise scanning. All values above the actual line and all values left from the actual pixel position in the actual line are already calculated/actualized. All values below the actual line and right from the actual pixel position in the actual line still have their initial value; this is either the initial input value or the value from the last iteration depending on the content of buffer A.

In this case adaptive means that the weighting coefficients are not fixed but they vary from calculation to calculation. In case of the regularizing filtering the coefficients will be read out or derived from Buffer B. The shape is predetermined by the filter mask and can be chosen depending on the specific application.

The general structure of the regularization can be described as follows: The current pixel value is set to a weighted sum of the initial input value (buffer C) for this pixel and a value which is derived by an adaptive filtering of the surrounding (partly already processed) pixel values (buffer A), i.e. of the at least one further pixel 63. The filter mask determines the support region of the adaptive filtering and may also include pixel positions that are not directly neighboured to the current pixel position 60. The adaptive filter coefficients are read-out or derived from the weights calculated earlier (buffer B). Thus the adaptive coefficients may also be derived from values at pixel positions that are not included in the filter mask. It has to be noted in this context, that in general the read-out position in buffer B does not have to be the same as the position of the filter tap, i. e. of the further pixels 63, as explained later in this document.

The general mathematical formulation is given in (7). Here the current position is denoted with the subscript *i, j*. The filter mask is given by h and the (adaptive) coefficients are denoted with b and are derived from the local values in buffer B with the offsets $o_1$ and $o_2$ relative to the filter tap position to adjust the read-out position in buffer B. N is the number of filter taps and λ is the regularization rate. This formulation can be interpreted as mixing the initial value with a spatially recursive and adaptive weighted filtering of the surrounding pixel values, whereas some pixel values are (partially) excluded from the filtering by the adaptive filter coefficients, if they do not belong to the same class or object as the central pixel.

$$A_{i,j} = d \cdot \left( C_{i,j} + \frac{\lambda}{N} \sum_{n,m} h_{n,m} \cdot b_{\substack{i-n-o_1(n,m), \\ j-m-o_2(n,m)}} \cdot A_{i-n,j-m} \right)$$

$$with \; d = \left( 1 + \frac{\lambda}{N} \sum_{n,m} h_{n,m} \cdot b_{\substack{i-n-o_1(n,m), \\ j-m-o_2(n,m)}} \right)^{-1}$$

(7)

An example for such a filter mask is illustrated in figure 7. Figure 7 shows the content of buffer A. At the beginning of the regularization the original filtered image 4 submitted from the block noise filter 3 is stored in buffer A. Then a linewise processing of the pixels stored in buffer A begins and the previous value of a pixel is overwritten by the newly calculated value. That means that buffer A contains partly pixels which in the actual iteration step are already processed and other pixels which in the actual iteration step have not yet been processed. This is shown in figures 7 to 9. The actual processed pixel 60 is shown and sort of divides the pixels within the buffer into already processed pixels 61 prior to the actual pixel 60 and into pixels to be processed 62 in this iteration step after the actual processed pixel 60.

Figure 7 shows the position P2 to P5 of the filter taps, i.e. of the further pixels 63, for computation of the actual pixel 60 at position P1. The values used for computation from buffer A are at positions P2 to P5. It has to be noted that the values at positions P2 and P5 in this iteration step are already processed. The values from buffer A are multiplied by the weights from buffer B. The position of the values read out from buffer B are not at the same position as that of the filter taps due to the mathematical derivation of the filter mask with central differences. The computation formula for the new value that will be stored at position P1 in buffer A can be calculated with the filter mask given in figure 7 by

$$A_{i,j} = d \cdot \left( C_{i,j} + 0.25\lambda \left( B_{i-1,j} A_{i-2,j} + B_{i+1,j} A_{i+2,j} + B_{i,j-1} A_{i,j-2} + B_{i,j+1} A_{i,j+2} \right) \right)$$

$$\text{with } d = \left( 1 + 0.25\lambda \left( B_{i-1,j} + B_{i+1,j} + B_{i,j+1} + B_{i,j-1} \right) \right)^{-1} \tag{8}$$

In this formula i, j is the position of the center position (where i addresses the row and j the line). The values A stem from buffer A and the values B from buffer B. The values C at the center position result from buffer C (buffer of the unfiltered input image, see figure 2). The value $\lambda$ is the so called regularization rate.

By tuning the value of the regularization rate strength of convergence to the mathematical optimum can be controlled. The higher the regularization rate the higher the amount of processing. A higher value of $\lambda$ results in a stronger smoothing of the image. The value of $\lambda$ can be constant, or be higher or lower in certain image regions to protect image content in these regions. The value computed by calculation rule in formula (8) is stored at position (i, j) in buffer A. The position of the pixel to be computed is set to the position directly left of the actual one (i+1, j). After reaching the end of line the next position is the first row in the line below (0, j+1).

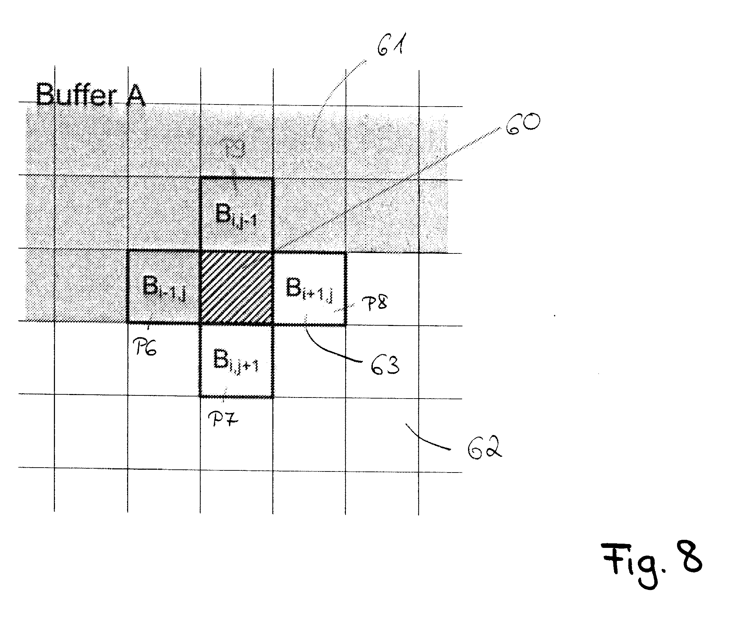

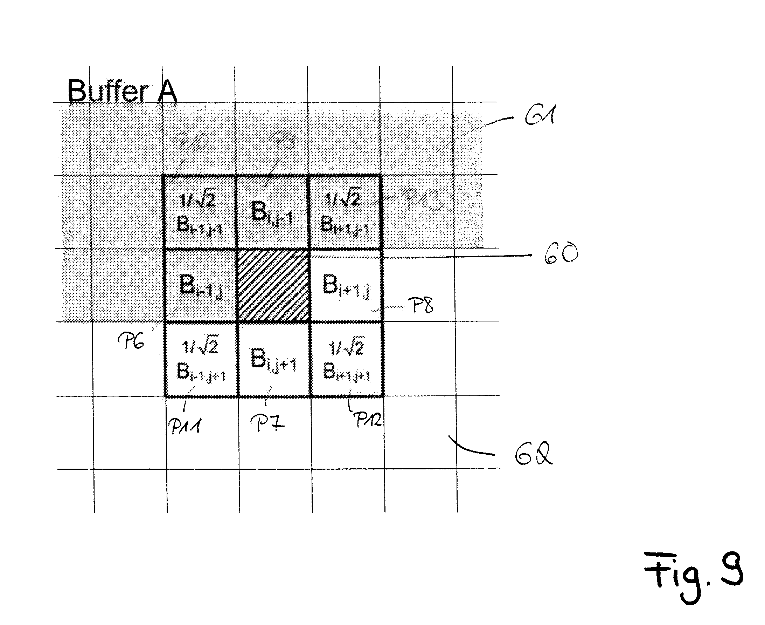

The filter mask from figure 7 and the calculation rule in formula (8) have an effect on a large area and neglect diagonals. Therefore additional variants can be implemented, whereby two non-limiting examples are shown in figure 8 and 9.

Whereas formula (8) is based on a mathematical derivation, the filter mask depicted in figures 8 and 9 are based on heuristic derivations and the optimization of the regularizing result is based on visual criteria.

The related rules of calculation are given in formulas (9) and (10).

Rule of calculation for filter mask depicted in figure 8:

$$A_{i,j} = d \cdot \left( C_{i,j} + 0.25\lambda \left( B_{i-1,j} A_{i-1,j} + B_{i+1,j} A_{i+1,j} + B_{i,j-1} A_{i,j-1} + B_{i,j+1} A_{i,j+1} \right) \right)$$

$$\text{with } d = \left( 1 + 0.25\lambda \left( B_{i-1,j} + B_{i+1,j} + B_{i,j+1} + B_{i,j-1} \right) \right)^{-1} \tag{9}$$

Rule of calculation for filter mask depicted in figure 9:

$$A_{i,j} = d \cdot C_{i,j} + 0.25 \cdot \lambda \cdot d \cdot \left( B_{i-1,j} A_{i-1,j} + B_{i+1,j} A_{i+1,j} + B_{i,j-1} A_{i,j-1} + B_{i,j+1} A_{i,j+1} \right) +$$

$$\frac{1}{\sqrt{2}} \cdot 0.25 \cdot \lambda \cdot d \cdot \left( B_{i-1,j-1} A_{i-1,j-1} + B_{i+1,j+1} A_{i+1,j+1} + B_{i+1,j-1} A_{i+1,j-1} + B_{i+1,j+1} A_{i+1,j+1} \right)$$

$$\text{with } d = \left( 1 + 0.25\lambda \left( B_{i-1,j} + B_{i+1,j} + B_{i,j+1} + B_{i,j-1} + \frac{1}{\sqrt{2}} \left( B_{i-1,j-1} + B_{i+1,j-1} + B_{i+1,j+1} + B_{i+1,j-1} \right) \right) \right)^{-1} \tag{10}$$

The present invention thus provides a very elaborated and effective method for reducing compression artifacts in video signals. The present invention further proposes several different embodiments and different ideas how the method and algorithm can be carried out.

The present invention proposes an application of regularizing method to remove coding artifacts in a post-processing scenario independent from coding parameters, i.e. the image has to be pre-processed using preferably a deblocking method and regions worth to be protected must be masked by an image analysis.

The present invention proposes an implementation of regularization by minimization of total variation. The method reduces the regularizing by minimizing of total variation to an adaptive recursive filter stage that can be implemented very hardware efficient. The calculation is done iteratively applying repeated recursive filtering and generation of new weighting coefficients. In most applications one iteration is sufficient (Generation of weighting coefficients and then one application of the regularizing filter).

The present invention proposes an adaptive processing of regularizing filter. The strength of regularization can be controlled adaptively to protect certain image regions and image content (e.g. textures and details) from too strong processing. The detection of regions worth to be protected is done by an external image analysis.

The present invention proposes a generation of adaptive weighting coefficients. It is possible to control the strength and direction of the regularizing filter locally by modification of weighting coefficients through addition and multiplication of external values from an image analysis.

The present invention proposes modified filter masks of regularizing filter. The used filter masks are not derived analytical from the optimization equation but are based on own assumptions and optimizations.

**Claims**

1. Method for reducing compression artifacts in a video signal, comprising the steps of filtering discontinuous boundaries within the input image (2), and
smoothing the filtered image.

2. Method according to claim 1,
wherein the step of smoothing bases on a minimization of the total variation of the filtered image (4).

3. Method according to any of the preceding claims,
further comprising the step of repeating the step of smoothing at least once by smoothing the previously smoothed image (11).

4. Method according to claim 3,
wherein the step of smoothing uses an adaptive, recursive filtering.

5. Method according to any of the preceding claims,
wherein the step of smoothing comprises selecting the level of smoothing of the filtered image (4) based on the gradient values of the filtered image (4) and/or a previously smoothed image (11).

6. Method according to claim 5,
wherein the step of selecting comprises selecting a high level of smoothing for low gradient values and selecting a low level of smoothing for high gradient values.

7. Method according to claim 5 or 6,
further comprising the step of generating weighting factors (12) indicating the level of smoothing.

8. Method according to claim 7,
further comprising the steps of
selecting an actual position (60) within the actual image to be smoothed,
selecting at least one further position (63) within the filtered image (4) and/or the previously smoothed image (11),
obtaining at least one weighting factor (12) and
smoothing the actual position (60) based on the values of the at least one further position (63) and the at least one weighting factor (12).

9. Method according to claim 8,
wherein the smoothing of the actual position (60) is accomplished according to the following equation:

$$A_{i,j} = d \cdot \left( C_{i,j} + \frac{\lambda}{N} \sum_{n,m} h_{n,m} \cdot b_{\substack{i-n-o_1(n,m), \\ j-m-o_2(n,m)}} \cdot A_{i-n,j-m} \right)$$

(7)

$$with \ d = \left( 1 + \frac{\lambda}{N} \sum_{n,m} h_{n,m} \cdot b_{\substack{i-n-o_1(n,m), \\ j-m-o_2(n,m)}} \right)^{-1}$$

whereby the current position (60) is denoted with the subscript *i,j,* the filter mask h with its local support region n, m and the adaptive weighting factors 12 are denoted with b and are derived from the filtered image (4) and/or a previously smoothed image (11) and $o_1$ and $o_2$ being offsets to adjust the read-out position for the adaptive weighting factors b relative to the position of the at least one further pixel (63), N is the number of the at least one further pixel positions (63) and $\lambda$ is the regularization rate.

10. Method according to claim 9,
    wherein the smoothing of the actual position (60) is accomplished according to the following equation:

$$A_{i,j} = d \cdot \left( C_{i,j} + 0.25\lambda \left( B_{i-1,j} A_{i-2,j} + B_{i+1,j} A_{i+2,j} + B_{i,j-1} A_{i,j-2} + B_{i,j+1} A_{i,j+2} \right) \right)$$

$$with \ d = \left( 1 + 0.25\,\lambda \left( B_{i-1,j} + B_{i+1,j} + B_{i,j+1} + B_{i,j-1} \right) \right)^{-1}$$

(8)

11. Method according to claim 9,
    wherein the smoothing of the actual position (60) is accomplished according to the following equation:

$$A_{i,j} = d \cdot \left( C_{i,j} + 0.25\lambda \left( B_{i-1,j} A_{i-1,j} + B_{i+1,j} A_{i+1,j} + B_{i,j-1} A_{i,j-1} + B_{i,j+1} A_{i,j+1} \right) \right)$$

$$with \ d = \left( 1 + 0.25\,\lambda \left( B_{i-1,j} + B_{i+1,j} + B_{i,j+1} + B_{i,j-1} \right) \right)^{-1}$$

(9)

12. Method according to claim 9,
    wherein the smoothing of the actual position (60) is accomplished according to the following equation:

$$A_{i,j} = d \cdot C_{i,j} + 0.25 \cdot \lambda \cdot d \cdot \left( B_{i-1,j} A_{i-1,j} + B_{i+1,j} A_{i+1,j} + B_{i,j-1} A_{i,j-1} + B_{i,j+1} A_{i,j+1} \right) +$$

$$\frac{1}{\sqrt{2}} \cdot 0.25 \cdot \lambda \cdot d \cdot \left( B_{i-1,j-1} A_{i-1,j-1} + B_{i+1,j+1} A_{i+1,j+1} + B_{i+1,j-1} A_{i+1,j-1} + B_{i+1,j+1} A_{i+1,j+1} \right)$$

$$with \ d = \left( 1 + 0.25\,\lambda \left( B_{i-1,j} + B_{i+1,j} + B_{i,j+1} + B_{i,j-1} + \frac{1}{\sqrt{2}} \left( B_{i-1,j-1} + B_{i+1,j-1} + B_{i+1,j+1} + B_{i+1,j-1} \right) \right) \right)^{-1}$$

(10)

13. Method according to any of the preceding claims,
    further comprising the step of analysing the input image (2) with respect to image areas by an image analyser (7).

14. Method according to claim 13,
    further comprising the step of selecting the levelof smoothing based the analysis information (7a) submitted by the image analyser (7),
    whereby preferably a low grade of smoothing is selected for image areas having textures and/or details.

**15.** Apparatus for reducing compression artifacts in a video signal, comprising
a block noise filter (3) for filtering discontinuous boundaries within the input image (2), and
a regularizer (5) for smoothing the filtered image.

**Amended claims in accordance with Rule 137(2) EPC.**

**1.** Method for reducing compression artifacts in a video signal, comprising the steps of
analysing the input image (2) with respect to image areas by an image analyser (7) to obtain image analysis information (7a),
filtering discontinuous boundaries within the input image (2), and
smoothing the filtered image (4),
wherein obtained image analysis information (7a) is used in one or both of said steps of filtering and/or smoothing.

**2.** Method according to claim 1,
wherein the step of smoothing bases on a minimization of the total variation of the filtered image (4).

**3.** Method according to any of the preceding claims,
further comprising the step of repeating the step of smoothing at least once by smoothing the previously smoothed image (11).

**4.** Method according to claim 3,
wherein the step of smoothing uses an adaptive, recursive filtering.

**5.** Method according to any of the preceding claims,
wherein the step of smoothing comprises selecting the level of smoothing of the filtered image (4) based on the gradient values of the filtered image (4) and/or a previously smoothed image (11).

**6.** Method according to claim 5,
wherein the step of selecting comprises selecting a high level of smoothing for low gradient values and selecting a low level of smoothing for high gradient values.

**7.** Method according to claim 5 or 6,
further comprising the step of generating weighting factors (12) indicating the level of smoothing.

**8.** Method according to claim 7,
further comprising the steps of
selecting an actual position (60) within the actual image to be smoothed,
selecting at least one further position (63) within the filtered image (4) and/or the previously smoothed image (11),
obtaining at least one weighting factor (12) and
smoothing the actual position (60) based on the values of the at least one further position (63) and the at least one weighting factor (12).

**9.** Method according to claim 8,
wherein the smoothing of the actual position (60) is accomplished according to the following equation:

$$A_{i,j} = d \cdot \left( C_{i,j} + \frac{\lambda}{N} \sum_{n,m} h_{n,m} \cdot b_{\substack{i-n-o_1(n,m), \\ j-m-o_2(n,m)}} \cdot A_{i-n,j-m} \right)$$

$$with \; d = \left( 1 + \frac{\lambda}{N} \sum_{n,m} h_{n,m} \cdot b_{\substack{i-n-o_1(n,m), \\ j-m-o_2(n,m)}} \right)^{-1} \tag{7}$$

whereby the current position (60) is denoted with the subscript $i,j$, the filter mask h with its local support region n, m and the adaptive weighting factors 12 are denoted with b and are derived from the filtered image (4) and/or a previously smoothed image (11) and $o_1$ and $o_2$ being offsets to adjust the read-out position for the adaptive weighting factors b relative to the position of the at least one further pixel (63), N is the number of the at least one further pixel positions (63) and is the regularization rate.

**10.** Method according to claim 9,
wherein the smoothing of the actual position (60) is accomplished according to the following equation:

$$A_{i,j} = d \cdot \left( C_{i,j} + 0.25\lambda \left( B_{i-1,j} A_{i-2,j} + B_{i+1,j} A_{i+2,j} + B_{i,j-1} A_{i,j-2} + B_{i,j+1} A_{i,j+2} \right) \right)$$
$$\text{with } d = \left( 1 + 0.25\,\lambda \left( B_{i-1,j} + B_{i+1,j} + B_{i,j+1} + B_{i,j-1} \right) \right)^{-1}$$

$$(8)$$

**11.** Method according to claim 9,
wherein the smoothing of the actual position (60) is accomplished according to the following equation:

$$A_{i,j} = d \cdot \left( C_{i,j} + 0.25\lambda \left( B_{i-1,j} A_{i-1,j} + B_{i+1,j} A_{i+1,j} + B_{i,j-1} A_{i,j-1} + B_{i,j+1} A_{i,j+1} \right) \right)$$
$$\text{with } d = \left( 1 + 0.25\,\lambda \left( B_{i-1,j} + B_{i+1,j} + B_{i,j+1} + B_{i,j-1} \right) \right)^{-1}$$

$$(9)$$

**12.** Method according to claim 9,
wherein the smoothing of the actual position (60) is accomplished according to the following equation:

$$A_{i,j} = d \cdot C_{i,j} + 0.25 \cdot \lambda \cdot d \cdot \left( B_{i-1,j} A_{i-1,j} + B_{i+1,j} A_{i+1,j} + B_{i,j-1} A_{i,j-1} + B_{i,j+1} A_{i,j+1} \right) +$$
$$\frac{1}{\sqrt{2}} \cdot 0.25 \cdot \lambda \cdot d \cdot \left( B_{i-1,j-1} A_{i-1,j-1} + B_{i+1,j+1} A_{i+1,j+1} + B_{i+1,j-1} A_{i+1,j-1} + B_{i+1,j+1} A_{i+1,j+1} \right)$$
$$\text{with } d = \left( 1 + 0.25\lambda \left( B_{i-1,j} + B_{i+1,j} + B_{i,j+1} + B_{i,j-1} + \frac{1}{\sqrt{2}} \left( B_{i-1,j-1} + B_{i+1,j-1} + B_{i+1,j+1} + B_{i+1,j-1} \right) \right) \right)^{-1}$$

$$(10)$$

**13.** Method according to any of the preceding claims,
further comprising the step of selecting the level of smoothing based the analysis information (7a) submitted by the image analyser (7),
whereby preferably a low grade of smoothing is selected for image areas having textures and/or details.

**14.** Apparatus for reducing compression artifacts in a video signal, comprising an image analyser (7) for analysing the input image (2) with respect to image areas to obtain image analysis information (7a),
a block noise filter (3) for filtering discontinuous boundaries within the input image (2), and
a regularizer (5) for smoothing the filtered image,
wherein said block noise filter (3) and/or said regularizer (5) are adapted for using obtained image analysis information (7a).

Fig. 1

Fig.2

EP 2 226 760 A1

| | |
|---|---|
| **S1** | Set counter for iteration to 0 |
| **S0** | Start of Process |

**S2** Copy Input Image to Buffer A and C

**S3** Generat weights from buffer A

**S4** Store weights in buffer B

**S5** Perform inplace filtering on Buffer A

**S6** Increment iteration counter

**S7** Number of iterations reached?

no

yes

**S8** End of Process

# Fig. 3

S11 | set counters for inner and outer iteration to 0 | Start of process | S10

S12 | copy input image to buffer A and C

S13 | generate weights from buffer A

S14 | store weights in buffer B

S15 | perform inplace filtering on buffer A

S16 | increment inner iteration counter

S17 | number of inner iterations reached? — N

Y

S18 | increment outer iteration counter

S19 | number of outer iterations reaached? — Y → End of process | S21

N

S20 | set counter for inner iteration to 0

# Fig. 4

Fig. 5

Fig. 6

Fig. 4

Fig. 8

EP 2 226 760 A1

Buffer A

G1

$\frac{1}{\sqrt{2}} B_{i-1,j-1}$   $B_{i,j-1}$   $\frac{1}{\sqrt{2}} B_{i+1,j-1}$

P4

60

$B_{i-1,j}$     $B_{i+1,j}$

P8

P6

$\frac{1}{\sqrt{2}} B_{i-1,j+1}$   $B_{i,j+1}$   $\frac{1}{\sqrt{2}} B_{i+1,j+1}$

P11   P7   P12

62

Fig. 9

| | Europäisches Patentamt | | | |
| European Patent Office | **EUROPEAN SEARCH REPORT** | | **Application Number** | |
| Office européen des brevets | | | EP 09 15 4206 | |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 728 414 B1 (CHANG JOON-HO [KR] ET AL) 27 April 2004 (2004-04-27) * abstract; figures 1-4 * * column 1, line 7 - column 2, line 46 * * column 2, line 66 - column 5, line 21 * ----- | 1-15 | INV. G06T5/00 G06T9/00 ADD. G06T5/20 |
| X | US 2005/147319 A1 (DESHPANDE SACHIN G [US] ET AL) 7 July 2005 (2005-07-07) * abstract; figures 1-13 * * paragraph [0005] - paragraph [0018] * * paragraph [0033] - paragraph [0107] * ----- | 1-15 | |
| X | AZEVEDO A ET AL: "Analysis of video filtering on the cell processor" CIRCUITS AND SYSTEMS, 2008. ISCAS 2008. IEEE INTERNATIONAL SYMPOSIUM ON, IEEE, PISCATAWAY, NJ, USA, 18 May 2008 (2008-05-18), pages 488-491, XP031392016 ISBN: 978-1-4244-1683-7 * the whole document * ----- | 1-15 | |
| X | BJONTEGAARD G ET AL: "Adaptive deblocking filter" IEEE TRANSACTIONS ON CIRCUITS AND SYSTEMS FOR VIDEO TECHNOLOGY, IEEE SERVICE CENTER, PISCATAWAY, NJ, US, vol. 13, no. 7, 1 July 2003 (2003-07-01), pages 614-619, XP011099254 ISSN: 1051-8215 * the whole document * ----- -/-- | 1-15 | TECHNICAL FIELDS SEARCHED (IPC) G06T |

The present search report has been drawn up for all claims

| Place of search | Date of completion of the search | Examiner |
|---|---|---|
| Munich | 23 July 2009 | Herter, Jochen |

EPO FORM 1503 03.82 (P04C01)

Europäisches
Patentamt

European
Patent Office

Office européen
des brevets

# EUROPEAN SEARCH REPORT

Application Number

EP 09 15 4206

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2008/075247 A1 (KONINKL PHILIPS ELECTRONICS NV [NL]; ZUO FEI [NL]; DE WAELE STIJN [NL]) 26 June 2008 (2008-06-26) * page 2, line 4 - page 3, line 8 * * page 21, line 12 - page 30, line 14 * * abstract; figures 1-23 * | 1-15 | |
| A | SHAO ET AL: "Simultaneous coding artifact reduction and sharpness enhancement for block-based compressed images and videos" SIGNAL PROCESSING. IMAGE COMMUNICATION, ELSEVIER SCIENCE PUBLISHERS, AMSTERDAM, NL, vol. 23, no. 6, 1 July 2008 (2008-07-01), pages 463-470, XP022757535 ISSN: 0923-5965 [retrieved on 2008-05-03] * the whole document * | 1-15 | |

TECHNICAL FIELDS
SEARCHED      (IPC)

The present search report has been drawn up for all claims

| Place of search | Date of completion of the search | Examiner |
|---|---|---|
| Munich | 23 July 2009 | Herter, Jochen |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 09 15 4206

This annex lists the patent family members relating to the patent documents cited in the above-mentioned European search report.
The members are as contained in the European Patent Office EDP file on
The European Patent Office is in no way liable for these particulars which are merely given for the purpose of information.

23-07-2009

| Patent document cited in search report | | Publication date | Patent family member(s) | Publication date |
|---|---|---|---|---|
| US 6728414 | B1 | 27-04-2004 | KR 20000033705 A | 15-06-2000 |
| US 2005147319 | A1 | 07-07-2005 | NONE | |
| WO 2008075247 | A1 | 26-06-2008 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5534925 A

- US 5819035 A

### Non-patent literature cited in the description

- **Piastowski, P.** System zur Decoder-unabhängigen Reduktion von Blockartefakten. VDE Verlag, 2005
- **Le Pennec, E. ; Mallat, S.** Sparse Geometrical Image Representations With Bandelets. *IEEE Transactions on Image Processing,* April 2005, vol. 14 (4

- Adapted total variation for artifact free decomposition of JPEG images. **Alter, F. ; Durand, S. ; Froment, J.** Journal of Mathematical Imaging and Vision. Springer, 2005, vol. 23
- **Yang, S. ; Hu, Y.** Blocking Effect Removal Using Regularization and Dithering. *IEEE International Conference on Image Processing,* 1998